# EUROPEAN PATENT SPECIFICATION

(11) **EP 2 808 487 B1**
(45) Date of publication and mention of the grant of the patent: **08.11.2017**
(21) Application number: 13169650.2
(22) Date of filing: 29.05.2013
(51) Int. Cl.: F01D 5/14

(54) **Method for closing an aperture on a blade of a gas turbine**
Verfahren zum Verschließen einer Öffnung auf einer Schaufel einer Gasturbine
Procédé pour fermer une ouverture sur une pale d'une turbine à gaz

(43) Date of publication of application: 03.12.2014
(73) Proprietor: Ansaldo Energia IP UK Limited, London W1G 9DQ (GB)
(72) Inventor: Luketic, Ivan, 5417 Untersiggenthal (CH); Koenig, Marcel, 5430 Wettingen (CH); Bogdanic, Laura, 5430 Wettingen (CH)
(74) Representative: Bernotti, Andrea

(56) References cited:
- EP-A1- 1 219 381
- EP-A1- 1 249 300
- JP-A- 2003 236 661
- JP-A- 2004 137 947
- US-A- 3 761 201

## Description

### Technical Field

The present invention relates to a gas turbine, in particular, to a blade of a gas turbine, more particularly, to a method for closing an aperture on a blade of a gas turbine.

### Background of the Invention

A blade of a gas turbine comprises a root, a platform and an airfoil. Generally, the blade of the gas turbine is operated at high speed and temperature. Thus, it is preferable to form the blade with relative thin, convex and concave side walls with multiple of internal cooling passages for cooling the side walls of the blade. As to improve the cooling efficiency, the internal cooling passage is designed complicated in structures.

Considering the critical aerodynamic shape of the blade and the complicated internal cooling passages, a casting process is usually adopted to manufacture the blade, in which a ceramic or glass core is placed in the mold to form the internal cooling passages. As a result, one or more apertures are left as the casting process is finished since the core has to extend from the tip end of the blade for handling and position. Then, it is necessary to seal the aperture on the tip end of the blade in order to prevent leakage of cooling fluid during operation of the blade. Conventionally, the aperture is sealed by means of a brazed plate, so-called "letter-box".

A method for plugging a hole on a tip of a gas turbine blade is disclosed in US6984801, which comprises steps of fitting a tip plug in a hole formed on a tip of the turbine blade, to provide a butting section between the tip plug and the tip of the turbine blade; performing a butt-weld at the butting section between the tip plug and the tip of the turbine blade by using a laser beam; and plugging the hole.

A turbine blade closure system is disclosed in US20040060964A1, which comprises a closure member capable of being friction welded in an aperture in a hollow-cast turbine blade to prevent the escape of cooling fluids from an internal cavity in the turbine blade. Different shapes of closure members and corresponding treatment to the aperture is also disclosed in this documents.

A method of manufacturing a turbine blade is disclosed in US20070258825A1, which comprises (a)supporting a turbine blade internal core support at opposite ends such that radially inner and outer ends of the turbine blade remain open during casting; (b) casting the blade including the airfoil portion, wherein the radially outer edge of the airfoil portion is inclined relative to horizontal; (c) machining the radially outer edge of the airfoil portion to form a peripheral shoulder about a radially outer opening in the airfoil portion; and (d) seating a tip cap on the peripheral shoulder and fixing, such as welding the tip cap to the airfoil portion of the blade. JP-2004137947 discloses a manufacturing method wherein a hole at the front-end tip of the hollow turbine blade is welded and closed by a TIG-welding method. It can be seen from above mentioned reference that the tip cap or similar member is adopted in all of their solutions in closing the aperture on the tip end of the blade left from casting process. Tip caps may complicate the overall process of sealing the aperture on the tip end of the blade, so as to make the process cycle prolonged. It is also known that the tip cap so welded on the tip end of the blade may lead to premature failure during operation of the gas turbine, which may result long down time for maintenance and repairing, hence substantial cost incurred.

### Summary of the Invention

It is an object of the present invention to provide a method for closing an aperture on the tip end of the blade, which may eliminate or at least alleviate the problems mentioned above.

This object is obtained by a method for closing an aperture on a blade of a gas turbine, wherein the blade of the gas turbine comprises a tip end with a top surface and a bottom surface, the aperture is formed on the tip end of the blade, and the aperture comprise a peripheral edge, the method comprise a step of: closing the aperture with a weld formed by means of a Tungsten Inert Gas(TIG) welding process without an insert placed in the aperture wherein the TIG welding process is carried out along a peripheral edge of the aperture; the TIG welding process beginning from the peripheral edge of the aperture, and proceeding in a spiral manner toward the centre of the aperture, where the TIG welding process is finished and the aperture is closed by the weld. According to one possible embodiment of the present invention, the TIG process is carried out through an overlaying welding.

According to one possible embodiment of the present invention, the weld formed by the TIG process is extended over the top surface and the bottom surface of the tip end of the blade, respectively.

According to one possible embodiment of the present invention, the method further comprises, before the step of closing, a step of: cleaning the peripheral edge of the aperture and a portion proximate the peripheral edge of the aperture that is affected by the TIG process.

According to one possible embodiment of the present invention, the method further comprises, before the step of closing, a step of: bevelling the peripheral edge of the aperture so as to make the same form a predetermined angle relative to the bottom surface of the tip end of the blade.

According to one possible embodiment of the present invention, the method further comprises, after the step of closing, a step of: finishing the weld formed by the TIG process so as to make a top surface of the weld conform with the top surface of the tip end of the blade.

According to one possible embodiment of the present invention, the method further comprises, before the step of closing, a step of: heat treating the tip end of the blade.

With the technical solution of the present invention, it provides a simple and cost effective solution to close the aperture on the tip end of the blade, dispensing with the conventionally utilized "letter-box", insert, tip cap and the like. In view of this, process of closing the aperture may be simplified, and the cost incurred may be reduced. Further, premature failure of the blade is prevented.

### Brief Description of the Drawings

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
Fig. 1 shows a schematic plan view of a tip end of a blade of a gas turbine;
Fig. 2 shows a cross-section side view of the tip end of the blade before welding; and
Fig.3 shows a cross-section side view of the tip end of the blade after welding.

### Detailed Description of Different Embodiments of the Invention

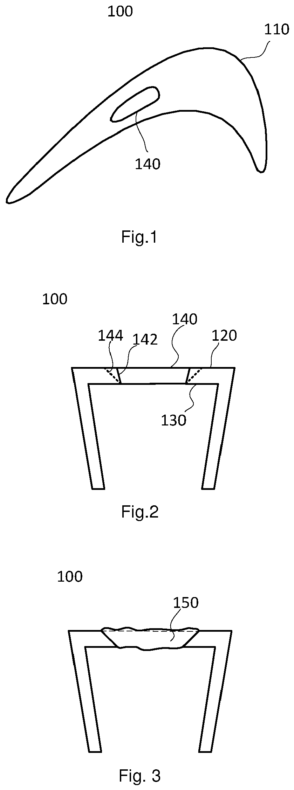

Fig.1 shows a schematic plain view of a tip end of a blade 100 of a gas turbine. The blade 100 of the gas turbine comprises a tip end 110 with a top surface 120 and a bottom surface 130, shown in Fig. 2. An aperture 140 is formed, such as by casting process, on the tip end 110 of the blade 100, and the aperture 140 comprises a peripheral edge 142, shown in Fig.2. According to one embodiments of the present invention, a method of closing the aperture comprise a step of: closing the aperture 140 with a weld 150 (shown in Fig. 3) formed by means of a Tungsten Inert Gas(TIG) welding process without an insert placed in the aperture 140.

In one possible embodiment of the present invention, the TIG process is carried out along the peripheral edge 142 of the aperture 140. In particular, the TIG process begins from the peripheral edge 142 of the aperture 140, and proceeds in a spiral manner toward the centre of the aperture 140, where the TIG process is finished and the aperture 140 is closed by the weld 150.

In one preferred embodiment of the present invention, the blade 100, in particular, the tip end 110 thereof, may subject to heat treatment before welding to make the tip end 110 of the blade 100 more weldable and to avoid cracks in the resultant weld 150. Thus, the method may comprise a step of: heat treating the tip end 110 of the blade 100.

It should be understand by those skilled in the art that, as the thickness, i.e. the distance between the top surface 120 and the bottom surface 130, of the tip end 110 of the blade 100 is much large in some blade, the weld 150 can not fill out the whole thickness of the tip end 110. In this case, the TIG process may be carried out through an overlaying welding according to one preferable embodiment of the present invention, in order to sufficiently fill out the thickness of the tip end 110 hence assure the enough strength of the weld 150.

In actual applications, the tope surface 120 and the bottom surface 130 may not remain flat due to processing varieties and fabricating errors. In this case, as shown in Fig. 3, the weld 150 formed by TIG process may be extended over the top surface 120 and the bottom surface 130 of the tip end 110 of the blade 100, respectively, in order to eliminate any unevenness in the top surface 120 and the bottom surface 130, hence to assure the strength and appearance of the weld 150 and the top surface 120, even though the appearance of the bottom surface 120 represents less importance.

According to one preferred embodiment of the present invention, the method further comprises a step of cleaning the peripheral edge 142 of the aperture 140 and a portion proximate the peripheral edge 142 of the aperture 140 that is affected by the TIG process, before the step of closing. The step of cleaning may be utilized to remove any oxidized metal covering the peripheral edge 142 of the aperture 140 and the portion proximate the peripheral edge 142 of the aperture 140 that is affected by the TIG process, which may prevent the oxidized metal deteriorate the quality of the weld 150.

Additionally, in one possible embodiment of the present invention, as shown by the break lines in Fig. 2, the peripheral edge 142 of the aperture 140 may be bevelled. Thus, the method according to the present invention my further comprises a step of bevelling the peripheral edge 142 of the aperture 140 so as to make the same form a predetermined angle relative to the bottom surface 130 of the tip end 110 of the blade 100, before the closing step. The bevel 144 thus formed may facilitate the welding process and weld strength. As to the angle between the bevel 144 and the bottom surface 130, those skilled in the art may select suitable angle, such as, 30°, 45°, and the like, according to particular applications.

Additionally, the method according to one embodiment of the present invention may further comprise a step of finishing the weld 150 formed by the TIG process so as to make a top surface of the weld 150 conform with the top surface 120 of the tip end 110 of the blade 100. This finishing step may be carried out by means of machine tools, or may be manually performed. The finished top surface of the weld generally flush with the top surface 120 of the tip end 110 of the blade 100 in order to provide a smooth and finished surface for further processing and assembly.

It should be understood by those skilled in the art that the above described steps and performing sequence thereof may be selected and determined according to particular applications. It is intended that any combination of the above described steps fall into the protection scope of the present invention, provided that the said combination constitute one possible solution in addressing certain technical problems encountered during field practice.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

### List of Reference Numerals

- 100: blade
- 110: tip end
- 120: top surface
- 130: bottom surface
- 140: aperture
- 142: peripheral edge
- 144: bevel
- 150: weld

## Claims

1. A method for closing an aperture on a blade of a gas turbine, wherein the blade of the gas turbine comprises a tip end with a top surface and a bottom surface, the aperture is formed on the tip end of the blade, and the aperture comprise a peripheral edge, the method comprise a step of closing the aperture with a weld formed by means of a Tungsten Inert Gas(TIG) welding process without an insert placed in the aperture;
the method being **characterized in that** the TIG welding process is carried out along a peripheral edge of the aperture; the TIG welding process beginning from the peripheral edge of the aperture, and proceeding in a spiral manner toward the centre of the aperture, where the TIG welding process is finished and the aperture is closed by the weld.

2. The method according to claim 1, **characterized in that**, the TIG process is carried out through an overlaying welding.

3. The method according to any of claims 1 to 2, **characterized in that**, the weld formed by the TIG process is extended over the top surface and the bottom surface of the tip end of the blade, respectively.

4. The method according to any of claims 1 to 3, **characterized in that**, the method further comprises, before the step of closing, a step of :
cleaning the peripheral edge of the aperture and a portion proximate the peripheral edge of the aperture that is affected by the TIG process.

5. The method according to any of claim 1 to 4, **characterized in that**, the method further comprises, before the step of closing, a step of :
bevelling the peripheral edge of the aperture so as to make the same form a predetermined angle relative to the bottom surface of the tip end of the blade.

6. The method according to any of claims 1 to 4, **characterized in that**, the method further comprises, after the step of closing, a step of:
finishing the weld formed by the TIG process so as to make a top surface of the weld conform with the top surface of the tip end of the blade.

7. The method according to any of claims 1 to 6, **characterized in that**, the method further comprises, before the step of closing, a step of :
heat treating the tip end of the blade.

## Patentansprüche

1. Verfahren zum Verschließen einer Öffnung an einer Schaufel einer Gasturbine, wobei die Schaufel der Gasturbine ein Spitzenende mit einer oberen Oberfläche und einer unteren Oberfläche aufweist, die Öffnung an dem Spitzenende der Schaufel gebildet ist und die Öffnung einen Umfangsrand aufweist, welches Verfahren einen Schritt zum Verschließen der Öffnung mit einer Schweißnaht, die mittels eines Wolfram-Inertgas-Schweißprozesses (WIG) gebildet wird, ohne dass ein Einsatz in die Öffnung eingesetzt wird, umfasst;
welches Verfahren **dadurch gekennzeichnet ist, dass** der WIG-Schweißprozess entlang einem Umfangsrand der Öffnung ausgeführt wird, wobei der WIG-Schweißprozess von dem Umfangsrand der Öffnung beginnt und spiralförmig zur Mitte der Öffnung hin fortschreitet, wo der WIG-Schweißprozess beendet wird und die Öffnung durch die Schweißnaht verschlossen wird.

2. Verfahren nach Anspruch 1, **dadurch gekennzeichnet, dass** der WIG-Prozess mittels einer Auftragschweißung durchgeführt wird.

3. Verfahren nach einem der Ansprüche 1 bis 2, **dadurch gekennzeichnet, dass** die durch den WIG-Prozess gebildete Schweißnaht jeweils über die obere Oberfläche und die untere Oberfläche des Spitzenendes der Schaufel ausgedehnt wird.

4. Verfahren nach einem der Ansprüche 1 bis 3, **dadurch gekennzeichnet, dass** das Verfahren vor dem Schritt des Verschließens ferner einen Schritt des
Reinigens des Umfangsrands der Öffnung und eines von dem WIG-Prozess betroffenen Teils nahe dem Umfangsrand der Öffnung enthält.

5. Verfahren nach einem der Ansprüche 1 bis 4, **dadurch gekennzeichnet, dass** das Verfahren vor dem Schritt des Verschließens ferner einen Schritt des
Abfasens des Umfangsrands der Öffnung, sodass dieser einen vorbestimmten Winkel relativ zu der unteren Oberfläche des Spitzenendes der Schaufel bildet, enthält.

6. Verfahren nach einem der Ansprüche 1 bis 4, **dadurch gekennzeichnet, dass** das Verfahren nach dem Schritt des Verschließens ferner einen Schritt des
Endbearbeitens der durch den WIG-Prozess gebildeten Schweißnaht, so dass eine obere Oberfläche der Schweißnaht mit der oberen Oberfläche des Spitzenendes der Schaufel übereinstimmt, enthält.

7. Verfahren nach einem der Ansprüche 1 bis 6, **dadurch gekennzeichnet, dass** das Verfahren vor dem Schritt des Verschließens ferner einen Schritt des
Wärmebehandelns des Spitzenendes der Schaufel enthält.

## Revendications

1. Procédé pour fermer une ouverture sur une pale d'une turbine à gaz, dans lequel la pale de la turbine à gaz comprend une extrémité de pointe avec une surface supérieure et une surface inférieure, l'ouverture est formée sur l'extrémité de pointe de la pale, et l'ouverture comprend un bord périphérique, le procédé comprend une étape consistant à fermer l'ouverture avec une soudure formée au moyen d'un procédé de soudage en atmosphère inerte avec électrode de tungstène (TIG) sans insert placé dans l'ouverture ;
le procédé étant **caractérisé en ce que** le procédé de soudage TIG est réalisé le long d'un bord périphérique de l'ouverture : le procédé de soudage TIG commençant à partir du bord périphérique de l'ouverture, et se poursuivant en spirale vers le centre de l'ouverture, où le procédé de soudage TIG se termine, et l'ouverture est fermée par la soudure.

2. Procédé selon la revendication 1, **caractérisé en ce que** le procédé TIG est réalisé par le biais d'une soudure de recouvrement.

3. Procédé selon l'une quelconque des revendications 1 à 2, **caractérisé en ce que** la soudure formée par le procédé TIG s'étend respectivement sur la surface supérieure et la surface inférieure de l'extrémité de pointe de la pale.

4. Procédé selon l'une quelconque des revendications 1 à 3, **caractérisé en ce que** le procédé comprend en outre, avant l'étape de fermeture, une étape consistant à :
nettoyer le bord périphérique de l'ouverture et une partie à proximité du bord périphérique de l'ouverture qui est affectée par le procédé TIG.

5. Procédé selon l'une quelconque des revendications 1 à 4, **caractérisé en ce que** le procédé comprend en outre, avant l'étape de fermeture, une étape consistant à :
biseauter le bord périphérique de l'ouverture afin de donner la même forme à un angle prédéterminé par rapport à la surface inférieure de l'extrémité de pointe de la pale.

6. Procédé selon l'une quelconque des revendications 1 à 4, **caractérisé en ce que** le procédé comprend en outre, après l'étape de fermeture, une étape consistant à :
finir la soudure formée par le procédé TIG afin de rendre une surface supérieure de la soudure conforme à la surface supérieure de l'extrémité de pointe de la pale.

7. Procédé selon l'une quelconque des revendications 1 à 6, **caractérisé en ce que** le procédé comprend en outre, avant l'étape de fermeture, une étape consistant à :
traiter à chaud l'extrémité de pointe de la pale.
